(19) Europäisches Patentamt
European Patent Office
Office européen des brevets

(11) Numéro de publication: **0 146 560**
**B1**

(12) # FASCICULE DE BREVET EUROPÉEN

(45) Date de publication du fascicule du brevet: **03.02.88**

(51) Int. Cl.⁴: **C 08 G 73/02**, H 01 M 4/60

(21) Numéro de dépôt: **84901780.1**

(22) Date de dépôt: **04.05.84**

(86) Numéro de dépôt international: **PCT/FR 84/00124**

(87) Numéro de publication internationale: **WO 84/04528 (22.11.84 Gazette 84/27)**

(54) **PROCEDE DE PREPARATION DE POLYANILINES, ET LEURS APPLICATIONS A LA REALISATION DE GENERATEURS ELECTROCHIMIQUES.**

(30) Priorité: **06.05.83 FR 8307958**

(43) Date de publication de la demande: **03.07.85 Bulletin 85/27**

(45) Mention de la délivrance du brevet: **03.02.88 Bulletin 88/5**

(84) Etats contractants désignés: **DE GB NL SE**

(56) Documents cité:
**Chemical Abstracts, vol. 93, no. 18, 3.11.1980 (Columbus, Ohio, US), A.F. Diaz et al.: "Electroactove polyaniline fils", page 163, abstract 168925z**
**Chemical Abstracts, vol. 94, no. 12, 23.3.1981 (Columbus, Ohio,US), A. Volkov et al.: "Electrochemical polymerization of aromatic amines IR, XPS and PMT study of thin film formation on a platinium electrode", page 130, abstract 84917f**
**Chemical Abstracts, vol. 77, no. 2, 10.7.1972 (Columbus, Ohio, US), M. Douomediff et al.: "Organic semiconductor electrodes", page 38, abstract 6298q**
**Bulletin de la Société Chimique de France, no. 11, November 1972 (Paris, FR), D. Muller et al.: "Préparation, propriétés chimiques et conductivité électrique à l'état solide des N-alkyl polyanilines.**

(73) Titulaire: **COMMISSARIAT A L'ENERGIE ATOMIQUE, 31/33, rue de la Fédération, F-75015 Paris (FR)**

(72) Inventeur: **GENIES, Eugène "La Biollette", Rue Troussai, F-38120 St. Egrève (FR)**
Inventeur: **PIERRE, Gérard, 34, rue du Chamechaude, F-38320 Toisat (FR)**
Inventeur: **SANTIER, Christian, 5, place Jacqueline Marval, F-38000 Grenoble (FR)**
Inventeur: **TSINTAVIS, Constantin, 35, cours de la Libération, F-38100 Grenoble (FR)**

(74) Mandataire: **Mongrédien, André, c/o BREVATOME 25, rue de Ponthieu, F-75008 Paris (FR)**

(56) Documents cité: (suite)
**A-étude de la réaction de polycondensation par oxydation des dérivés N-alkylés de l'aniline", pages 4083-4087**

**Le dossier contient des informations techniques présentées postérieurement au dépôt de la demande et ne figurant pas dans le présent fascicule.**

EP 0 146 560 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

**Description**

La présente invention a pour objet un procédé de préparation de polyanilines employées notamment comme matière d'électrode d'un générateur électrochimique.

Selon l'invention, par polyanilines, il faut entendre les polymères provenant de la condensation de l'aniline elle-même, mais aussi de celle de ses dérivés.

On sait que les polyanilines sont utilisées pour la réalisation de batterie électrochimique (voir par exemple le brevet français 1 519 729 et Chemical Abstracts, vol. 77, 1972, n° 6298q).

Ces polyanilines peuvent être préparées par polymérisation électrochimique comme il est décrit dans Chemical Abstracts, Vol. 93, 1980, n° 168925 z et dans Chemical Abstracts, Vol. 94, 1981, n° 84917f. On peut aussi les préparer par oxydation chimique en milieu sulfurique au moyen de persulfate d'ammonium comme il est décrit dans le Bulletin de la Société Chimique de France, 1972, n° 11, pages 4083-4084. Cependant, ces modes de préparation ont de mauvais rendements et conduisent à des composés contenant de nombreux oligomères mal définis. Cela se traduit par une dispersion des propriétés électrochimiques et donc des qualités des batteries réalisées à partir de ces dernières.

La présente invention propose donc un procédé de préparation de polyanilines ayant des rendements proches de la théorie et sans formation de produits secondaires oligomères, aptes à être utilisées comme matière active d'électrode dans une batterie et ayant de meilleures propriétés électrochimiques.

Plus précisément, l'invention a pour objet un procédé de préparation de polyanilines par oxydation d'un composé choisi parmi l'aniline, la para-aminodiphényl amine et leurs dérivés, caractérisé en ce que l'on réalise cette oxydation en phase liquide dans un superacide ayant un équivalent pH inférieur à 0 par rapport à l'eau, comportant des ions fluorure à une concentration de 0,5 à 10 ions.g/l.

Par superacide, on entend tous mélanges acides dont l'équivalent pH est inférieur à 0 par référence à l'eau, comme par exemple l'acide sulfurique, l'acide phosphorique, l'acide fluorhydrique, l'acide benzène sulfonique...

Selon une caractéristique secondaire de l'invention, la concentration de la phase liquide en composé choisi parmi l'aniline, la paraminodiphényl amine et leurs dérivés est comprise entre $10^{-3}$ et 4 mol/l.

Selon une autre caractéristique secondaire de l'invention, la phase liquide contenant le superacide et les ions fluorure est constituée par l'eutectique $NH_3$, HF qui contient environ 54,2 % de HF libre et 80,9 % de HF total (en poids).

On peut aussi utiliser des mélanges $RNH_2$, HF avec R représentant un radical alkyle et des mélanges pyridine, HF.

Selon une autre caractéristique secondaire de l'invention, la concentration en ions fluorure de la phase liquide est de 0,5 à 10 ions.g/l.

La phase liquide peut être une solution aqueuse ou organique contenant le super acide et les ions fluorure.

Par mélange de l'aniline ou de ses dérivés et du super acide contenant des ions fluorure, on obtient une solution de fluorure d'anilinium dont la concentration peut varier entre $10^{-3}$ et 4 mol/l.

Les modes de préparation des polyanilines asont les suivants:

- dans un premier temps, on réalise un mélange de l'aniline, de la para-aminodiphényl amine ou l'un de leurs dérivés et de la solution super acide contenant des ions fluorure;
- dans un deuxième temps, on réalise l'oxydation en polyanilines soit par voie chimique, soit par voie électrochimique.

La voie chimique fait intervenir le mélange de la solution précédente avec une solution dans le même super acide d'agents oxydants tel que le bichromate de potassium, le permanganate de potassium, le tétroxyde d'osmium et le persulfate d'ammonium.

Lorsque l'on réalise l'oxydation par voie chimique la concentration en aniline en para-aminodiphényl amine ou en dérivé d'aniline ou de paraminodiphényl amine de la solution super-acide est telle que dans la phase liquide finale, on ait une concentration de $10^{-3}$ à 4 mol/l d'aniline, de paraminodiphényl amine ou d'un de leurs dérivés. De même, la concentration en agent oxydant de la solution ajoutée à la solution d'aniline, de para-aminodiphényl amine ou de leurs dérivés, est telle que l'on obtienne dans la phase liquide finale une concentration en agent oxydant de $10^{-3}$ à 4 mol/l.

Par voie électrochimique, les polyanilines sont déposées électrolytiquement sur un support tel que le platine, le nickel, le "Monel", le carbone ou tout support en matériau revêtu de carbone, par exemple un support en acier inoxydable revêtu d'une peinture au graphite. Les densités de courant utilisées pour ce dépôt varient entre 0,05 et 100 mA/$cm^2$, la formation des polyanilines est quantitative. On obtient ainsi directement l'électrode de la batterie; les polyanilines préparées selon ce second mode de réalisation sont très stables et adhèrent très fortement au support (grille ou plaque).

Les polyanilines préparées selon le procédé de l'invention possèdent des propriétés électrochimiques très supérieures aux autres polymères conjugués conducteurs. Ainsi, après 1 600 cycles de charge et décharge complètes, la batterie à base de polyanilines préparées selon l'invention conserve encore 80 % de sa capacité, alors que d'autres polymères, le polypyrrole par exemple, perdent 20 % de leur capacité après 100 cycles.

Les composés utilisables pour la mise en oeuvre du procédé de l'invention, répondent à la formule générale suivante:

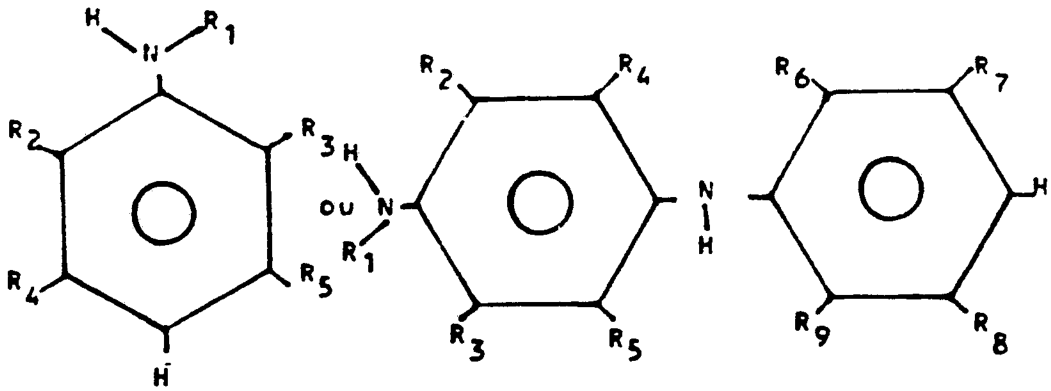

ou

dans laquelle $R_1$, $R_2$, $R_3$, $R_4$, $R_5$, $R_6$, $R_7$, $R_8$ et $R_9$ qui peuvent être identiques ou différents, représentent un atome d'hydrogène, un radical aryle ou alkyle, un groupement choisi parmi $NO_2$, $NH_2$, $CF_3$, $SO_2$, CN, $OCH_3$,

Cl, F, 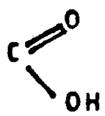 , 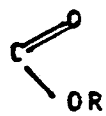 , SCN, OCN, 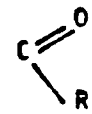 , $SO_2R$, 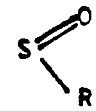 ,

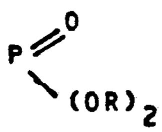 ,

SR (avec R = radical alkyle aryle) ou un radical choisi parmi les radicaux alkyles et aryles comportant éventuellement un ou plusieurs substituants choisis dans le groupe comprenant $NO_2$, $NH_2$, $CF_3$, $SO_2$,

CN, $OCH_3$, Cl, F, SCN, OCN, 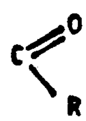 , $SO_2R$, 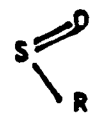 , 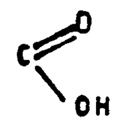 ,

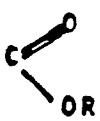 , 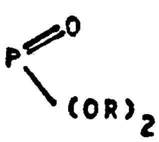 ,

SR (avec R - radical alkyle, aryle).

Lorsque la matière active d'électrode positive est une polyaniline, la matière active de l'électrode négative peut être constituée par un métal réactif tel que le lithium, par un polymère conjugué conducteur, par du carbone ou par un matériau composite, comme une céramique (oxyde d'ètain, oxyde d'indium, oxyde de titane dopé au fluor ou à l'antimoine). De préference, on utilise un métal réactif tel que le lithium et les alliages lithium-aluminium.

Les électrolytes, associés aux électrodes décrites ci-dessus, employés pour la réalisation d'un générateur utilisant une polyaniline préparée selon l'invention, sont de préference des sels de lithium tels que le perchlorate, le perborate et l'hexafluorophosphate. Néanmoins, on pourrait employer l'hexafluorophosphate de sodium, le fluoborate de tétraméthylammonium, le chlorure de tétraméthylammonium, le fluorure de tétraéthylammonium ou de tétrabutylammonium. Les électrolytes sont dissous dans un solvant tel que les éthers linéaires (diméthoxyéthane, par exemple), des éthers cycliques (dioxolane ou tétraméthylhydrofurane, par exemple) ou des esters (carbonate de propylène, par exemple).

Bien évidemment, les électrolytes ou les solvants peuvent être utilisés seuls ou en mélange.

Les concentrations en électrolyte dans le solvant dépendent du choix de chacun; dans le cas de perchlorate de lithium et du carbonate de propylène la concentration du sel dans le solvant est de 1 à 3 mol/l.

En se référant aux dessins annexés, d'autres avantages et caractéristiques de la présente invention apparaîtront mieux à la lecture de la description ci-après, donnée à titre illustratif et non limitatif.

La figure 1 représente, en coupe, un générateur comprenant une électrode chargée de polyaniline.

La figure 2 représente les courbes de voltamétrie cyclique de la polyaniline.

La figure 3 représente la courbe de décharge d'un générateur à intensité constante.

En se référant à la figure 1, on rappelle qu'un générateur électrochimique comporte un boîtier étanche et isolant 1, contenant un électrolyte 2. Dans ce boîtier sont placés un premier collecteur de courant 3 recouvert d'une matière active positive 5 et un collecteur 7 en contact avec une matière active négative 9. Des séparateurs 11 et 13 peuvent être prévus pour éviter tous courts-circuits. Bien entendu, plusieurs générateurs

ou batteries électrochimiques unitaires peuvent servir à réaliser un montage en série ou en parallèle.

Sur la figure 1, le boîtier en polyéthylène comporte un premier collecteur 3 en "Monel" recouvert d'une couche de polyaniline 5 d'environ 100 µm d'épaisseur obtenue dans les conditions suivantes:

. Dans un réacteur, on introduit 50 $cm^3$ de super acide constitué par l'eutectique $NH_3$, HF auquel on ajoute 0,5 $cm^3$ d'aniline.

. Dans le bain obtenu, on place une électrode en "Monel" de 40 cm2 en face d'une electrode de nickel et on applique un courant constant de 1 $mA/cm^2$ pendant une heure. L'anode en "Monel" devenue noir intense par suite du dépôt de 60 mg de polyaniline est lavée à l'eau, à l'acétone, puis au carbonate de propylène.

. On place ensuite dans le boîtier 1 une membrane en Nafion (®) 11 et un tissu en fibres minérales 13 et enfin un deuxième collecteur en acier inoxydable 7 sur lequel est déposée, par électrolyse, une couche de lithium 9 jouant le rôle de matière active négative. On peut aussi utiliser comme séparateur 11 et/ou 13 d'autres membranes échangeuses d'ions, du téflon® microporeux, du papier, de la laine de verre, des membranes en polymères, par exemple en polyéthylène, polypropylène, etc.

. Le boîtier est ensuite rempli d'un électrolyte formé d'une solution molaire de perchlorate de lithium dans du carbonate de propylène, puis obturé. Le générateur ainsi réalisé présente une force électromotrice de 3,5 volts avec une densité de courant d'environ 10 mA par $cm^2$.

Les collecteurs 3 et 7 se présentent sous forme de grille ou de plaque.

Sur la figure 2, on a représenté deux courbes de voltamétrie cyclique réalisées avec une vitesse de balayage de 0,1 $Vs^{-1}$ d'une électrode recouverte de 0,1 µm de polyaniline dans l'acétonitrile contenant 0,1 M de perchlorate de lithium.

L'enregistrement de ces courbes s'est fait au moyen d'un potentiostat PAR 173, les potentiels étant contrôlés par rapport à une électrode de référence $Ag/Ag^+$ $10^{-2}$ M. Les courbes A et B sont celles obtenues respectivement après 10 et 1 600 balayages. On constate, à l'examen de ces courbes, que les caractéristiques électriques sont peu altérées par le nombre de balayages.

Enfin sur la figure 3, on a représenté la courbe de décharge d'un générateur polyaniline/lithium à intensité constante de 30 µA, l'électrode positive ayant une surface de 1 $cm^2$ et étant recouverte d'une couche de polyaniline d'environ 2 µm.

On réalise de la même façon que précédemment un générateur électrochimique comportant de la polyaniline comme matière active d'électrode positive et un alliage lithium-aluminium comme matière d'électrode négative.

Le dépôt de la polyaniline est effectué par voie électrochimique, dans les mêmes conditions que précédemment, en utilisant 14 000 C pour déposer la polyaniline sur un support en graphite de 448 $cm^2$ de surface. On utilise comme électrolyte 250 $cm^3$ de carbonate de propylène contenant 1 mol/l de $LiClO_4$. Les caractéristiques du générateur ainsi obtenu sont les suivantes:

- capacité: 2 700 C,
- cyclage: 25 cycles à 80 % de profondeur,
- courants de cyclages: 500, 1000, 2000 $\mu A/cm^2$,
- courant maximum: 4,5 A,
- capacité massique: 126 Ah/kg,
- autodécharge: 2,6 mV/h,
- tension: 3,4 V,
- rèsistance interne: 0,26 Ω.

Avec un autre générateur électrochimique ayant comme matière active d'électrode positive de la polyaniline obtenue par le procédé de l'invention, comme matière active d'électrode négative un alliage lithium-aluminium et comme électrolyte du carbonate de propylène contenant 1 mol/l de $LiClO_4$, on a obtenu les résultats suivants:

- capacité massique: 140 Ah/kg,
- capacité maximum à la décharge: 15 $C/cm^2$,
- courant de court-circuit: 18 $mA/cm^2$,
- cyclages: 100 µA durant 45 h,
  0,5 mA durant 8 h 30,
  1 mA durant 4 h,
  2 mA durant 1 h 40,
- tension: 3,2 à 3,4 V,
- autodécharge: 1 à 2 mV/h avec séparateur,
  20 mV/h sans séparateur.

**Revendications**

1. Procédé de préparation de polyanilines par oxydation d'un composé choisi parmi l'aniline, la para-amino diphénylamine et leurs dérivés, caractérisé en ce que l'on réalise cette oxydation en phase liquide dans un superacide ayant un équivalent pH inférieur à 0 par rapport à l'eau, comportant des ions fluorure à une concentration de 0,5 à 10 ions.g/l.

2. Procédé selon la revendication 1, caractérisé en ce que le composé a pour formule générale:

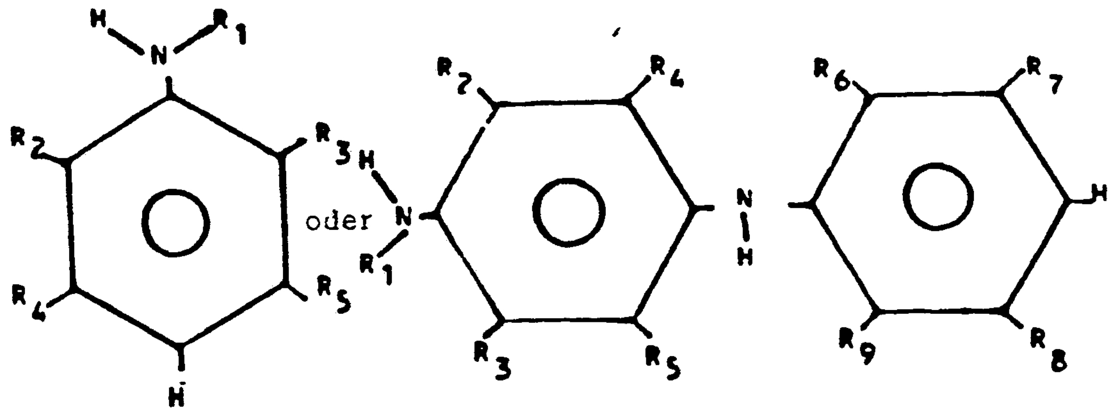

dans laquelle $R_1$, $R_2$, $R_3$, $R_4$, $R_5$, $R_6$, $R_7$, $R_8$ et $R_9$ qui peuvent être identiques ou différents, représentent un atome d'hydrogène, un radical aryle ou alkyle, un groupement choisi parmi $NO_2$, $NH_2$, $CF_3$, $SO_2$, CN, $OCH_3$,

Cl, F, 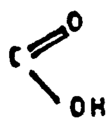, 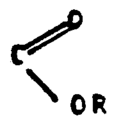, SCN, OCN, 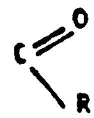, $SO_2R$, 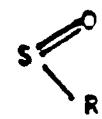,

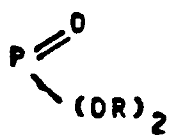,

SR (avec R = radical alkyle, aryle) ou un radical choisi parmi les radicaux alkyles et aryles comportant éventuellement un ou plusieurs substituants choisis dans le groupe comprenant $NO_2$, $NH_2$, $CF_3$, $SO_2$,

CN, $OCH_3$, Cl, F, SCN, OCN, 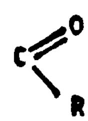, $SO_2R$, 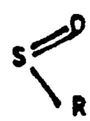, 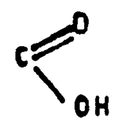,

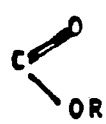, 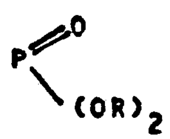,

SR (avec R = radical alkyle, aryle).

3. Procédé selon l'une quelconque des revendications 1 à 2, caractérisé en ce que la concentration de la phase liquide en composé choisi parmi l'aniline, la para-aminodiphényl amine et leurs dérivés, est comprise entre $10^3$ et 4 mol/l.

4. Procédé selon l'une quelconque des revendications 1 à 3, caractérisé en ce que la phase liquide contenant le super acide et les ions fluorure est l'eutectique $NH_3$, HF.

5. Procédé selon l'une des revendications 1 à 4, caractérisé en ce que l'oxydation est réalisée chimiquement.

6. Procédé selon la revendication 5, caractérisé en ce que les oxydants sont choisis parmi le bichromate de potassium, le permanganate de potassium, le tétroxyde d'osmium et le persulfate d'ammonium.

7. Procéde selon les revendications 1 à 4, caractérisé en ce que l'oxydation est réalisée électrochimiquement.

8. Procédé selon la revendication 7, caractérisé en ce que l'on utilise des électrodes en matériau choisi dans le groupe comprenant le platine, le nickel, le "Monel", le carbone et les matériaux revêtus de carbone.

9. Application des polyanilines préparées selon le procédé de l'une quelconque des revendications 1 à 8 à la réalisation de matières actives destinées aux génératurs électrochimiques.

**Patentansprüche**

1. Verfahren zur Herstellung von Polyanilinen durch Oxidation einer Verbindung, gewählt aus Anilin, para-Aminodiphenylamin und deren Derivaten, dadurch gekennzeichnet, daß man die Oxidation in flüssiger Phase in einer Supersäure, die bezüglich Wasser einen Äquivalent-pH von weniger als 0 besitzt, enthaltend Fluoridionen in einer Konzentration von 0,5 bis 10 Ionen g/l, durchfuhrt.

2. Verfahren nach Anspruch 1, dadurch gekennzeichnet, daß die Verbindung die allgemeine Formel besitzt:

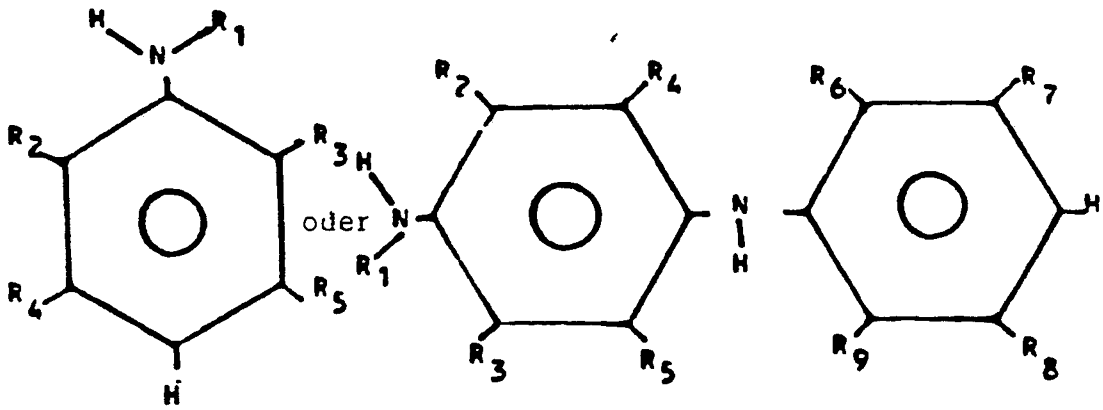
oder

worin bedeuten:

$R_1$, $R_2$, $R_3$, $R_4$, $R_5$, $R_6$, $R_7$, $R_8$, und $R_9$, die gleich oder verschieden sein können, ein Wasserstoffatom, eine Aryl- oder Alkylgruppe, eine Gruppe, gewählt aus $NO_2$, $NH_2$, $CF_3$, $SO_2$, CN, $OCH_3$,

Cl, F, 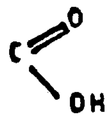, 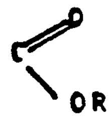, SCN, OCN, 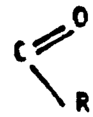, $SO_2R$, 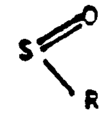,

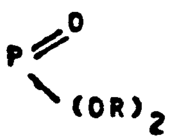,

SR (worin R = Alkyl- oder Arylrest) oder eine Gruppe, gewählt aus Alkyl- und Arylgruppen, die gegebenenfalls einen oder mehrere Substituenten enthalten, gewählt aus der Gruppe der $NO_2$, $NH_2$, $CF_3$, $SO_2$, CN, $OCH_3$, Cl,

F, SCN, OCN, 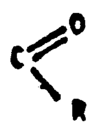, $SO_2R$, 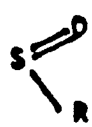, 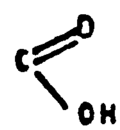, 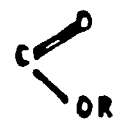, 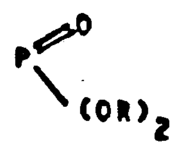,

SR (worin R = Alkyl- oder Arylrest).

3. Verfahren nach Anspruch 1 oder 2, dadurch gekennzeichnet, daß die Konzentration der Verbindung, gewählt aus Anilin, para-Aminodiphenylamin und deren Derivaten, in der flüssigen Phase, zwischen $10^{-3}$ und 4 Mol/l beträgt.

4. Verfahren nach einem der Ansprüche 1 bis 3, dadurch gekennzeichnet, daß die flüssige Phase, die die Supersäure und die Fluoridionen enthält, das Eutektikum $NH_3$, HF ist.

5. Verfahren nach einem der Ansprüche 1 bis 4, dadurch gekennzeichnet, daß die Oxidation chemisch durchgeführt wird.

6. Verfahren nach Anspruch 5, dadurch gekennzeichnet, daß die Oxidationsmittel gewählt werden aus Kaliumbichromat, Kaliumpermanganat, Osmiumtetroxid und Ammoniumpersulfat.

7. Verfahren nach den Ansprüchen 1 bis 4, dadurch gekennzeichnet, daß die Oxidation elektrochemisch durchgeführt wird.

8. Verfahren nach Anspruch 7, dadurch gekennzeichnet, daß man Elektroden verwendet, aus einem Material gewählt aus der Gruppe Platin, Nickel, "Monel", Kohlenstoff und mit Kohlenstoff überzogene Materialien.

9. Verwendung der gemäß dem Verfahren nach einem der Ansprüche 1 bis 8 hergestellten Polyaniline als Aktivmaterialien für elektrochemische Generatoren.

## Claims

1. Process for the preparation of polyanilines by oxidation of a compound chosen from among anilines, para-aminodiphenylamine and their derivatives, characterized in that this oxidation is performed in the liquid phase in a super acid having an equivalent pH below 0 with respect to water containing fluoride ions with a concentration of 0.5 to 10 ions. g/l.

2. Process according to claim 1, characterized in that the compound has the general formula:

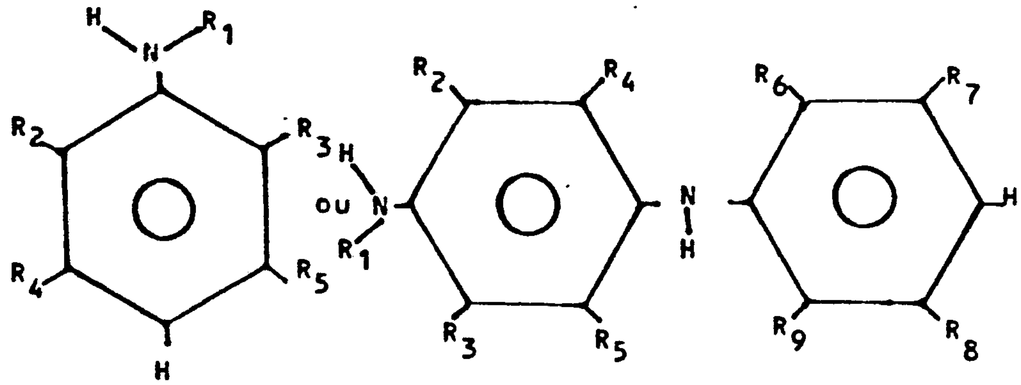

in which $R_1$, $R_2$, $R_3$, $R_4$, $R_5$, $R_6$, $R_7$, $R_8$ and $R_9$, which can be the same or different, represent a hydrogen atom, an aryl or alkyl radical, a group chosen from among $NO_2$, $NH_2$, $CF_3$, CN, $OCH_3$, Cl, F

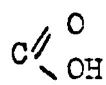, 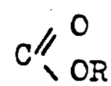, SCN,

OCN, 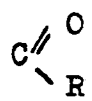, $SO_2R$, 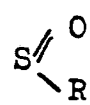, 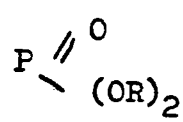,

SR (with R = an aryl or alkyl radical), or a radical chosen from among the alkyl and aryl radicals optionally having one or more substituents chosen in the group including

$NO_2$, $NH_2$, $CF_3$, $SO_2$, CN, $OCH_3$, Cl, F, SCN, OCN, 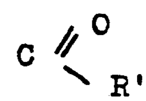

$SO_2R$, 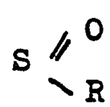, 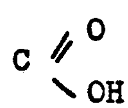, 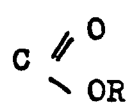, 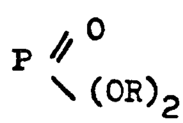, SR

(in which R is an alkyl or aryl radical).

3. Process according to any one of the claims 1 to 2, characterized in that the concentration of the liquid phase in the compound chosen from among aniline, para-aminodiphenylamine and their derivatives is between $10^{-3}$ and 4 mol/l.

4. Process according to any one of the claims 1 to 3, characterized in that the liquid phase containing the super acid and the fluoride ions is the eutectic $NH_3$, HF.

5. Process according to any one of the claims 1 to 4, characterized in that the oxidation is performed chemically.

6. Process according to claim 5, characterized in that the oxidizing agents are chosen from among potassium dichromate, potassium permanganate, osmium tetroxide and ammonium persulphate.

7. Process according to claims 1 to 4, characterized in that the oxidation is performed electrochemically.

8. Process according to claim 7, characterized in that electrodes are used, which are made from a material in the group including platinum, nickel, Monel, carbon and carbon-coated materials.

9. Application of the polyanilines prepared according to the process of any one of the claims 1 to 8 to the production of active materials for use in electrochemical generators.

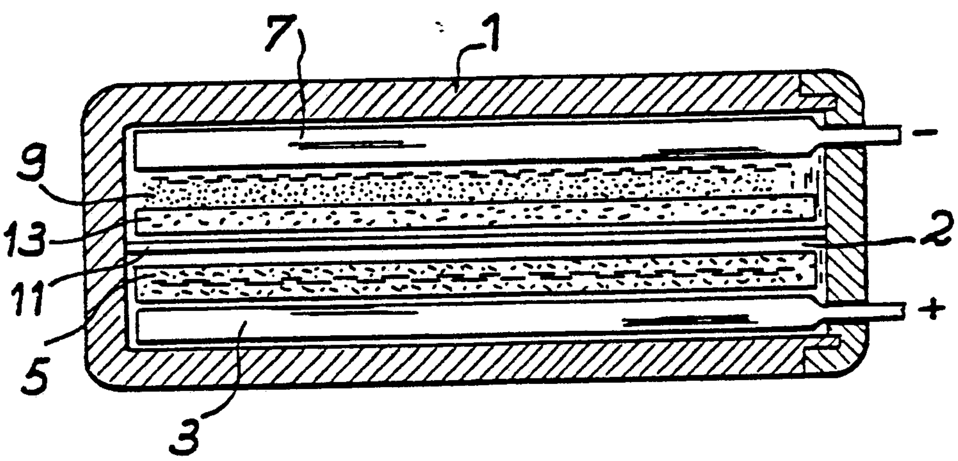


FIG. 1

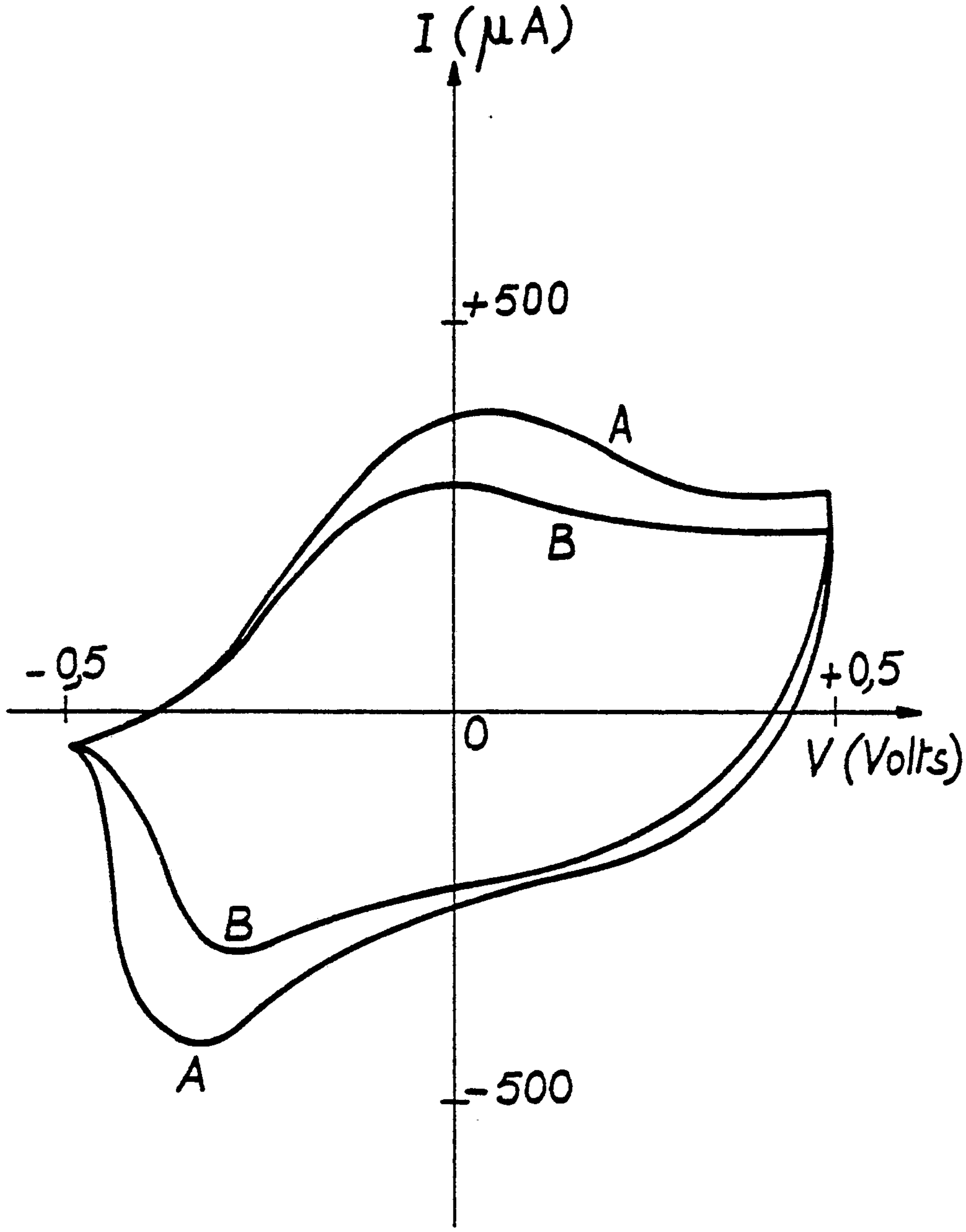


FIG. 2

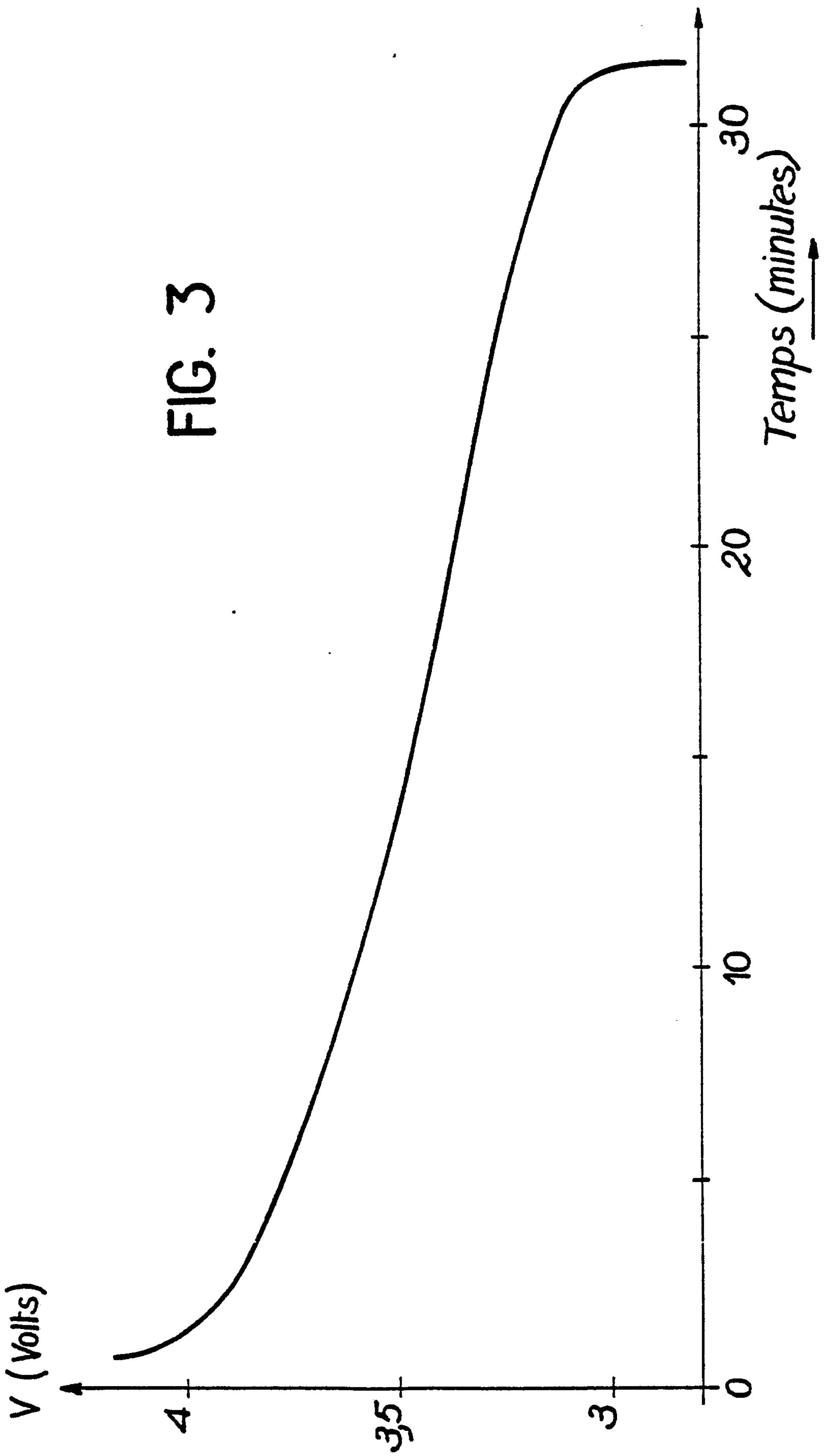


FIG. 3